# DEMANDE DE BREVET EUROPEEN

(11) **EP 0 761 957 A1**
(43) Date de publication de la demande: **12.03.1997**
(21) Numéro de dépôt: 96401895.6
(22) Date de dépôt: 05.09.1996
(51) Int. Cl.: F02K 1/70, F02K 1/68

(54) **Inverseur de poussée de turboréacteur à portes associées à un panneau amont formant écope**

(30) Priorité: 06.09.1995 FR 9510418
(71) Demandeur: HISPANO SUIZA, 92707 Colombes Cedex (FR)
(72) Inventeur: Gonidec, Patrick, 76310 Sainte Adresse (FR); Vauchel, Guy Bernard, 76610 Le Havre (FR)

(57) **Abrégé**

Un inverseur de poussée de turboréacteur à double flux comporte des portes pivotantes (7) constituant des obstacles de déviation lors du fonctionnement en inversion de poussée. Chaque porte (7) est doublée sur sa face interne en position fermée par un panneau amont (22) assurant un lissage de la veine fluide en jet direct. Ledit panneau amont (22) non relié à la porte (7) est susceptible lors du fonctionnement en inversion de poussée de pivoter dans un sens inverse à celui de la porte (7) de manière à présenter un bord amont plus proche radialement de l'axe du conduit que le bord aval, formant ainsi une écope qui prélève une partie interne de la veine pour assurer un pilotage des nappes du flux inversé et l'efficacité de l'inversion.

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

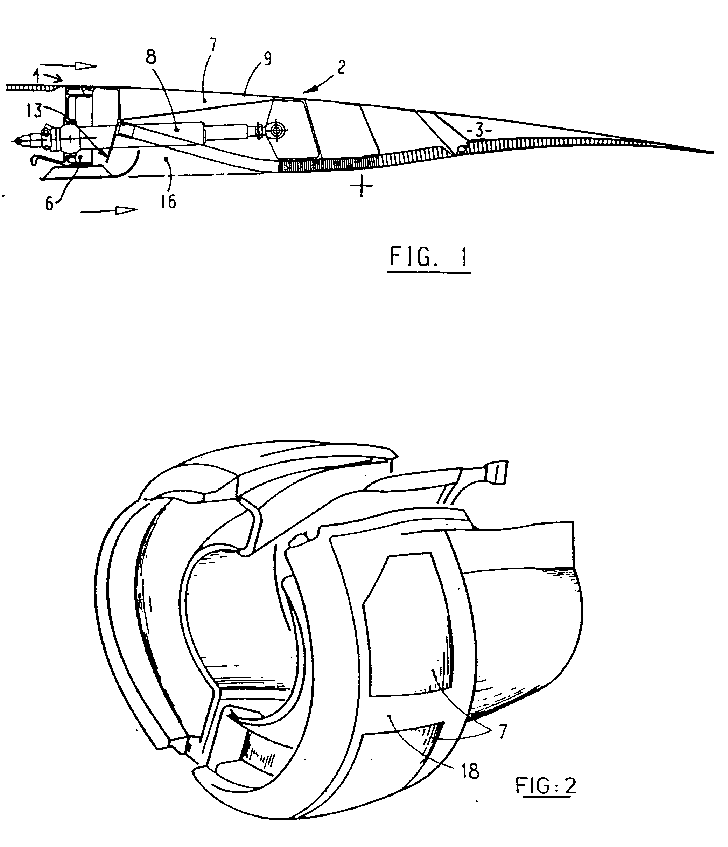

La figure 1 des dessins joints montre un exemple connu de réalisation d'un inverseur de poussée de ce type, appliqué comme le montre la vue schématique partielle en perspective de la figure 2, à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur en amont des portes, par une partie amont 1 en aval des portes par une partie aval 3 et entre les portes 7 par l'intermédiaire de poutres 18 qui relient la partie aval 3 du capotage extérieur à la partie amont 4 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 8.

En position activée, les portes 7 basculent de telle façon que la partie des portes situées en aval des pivots, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.

Des exemples connus de réalisation sont illustrés par exemple par FR 1 482 538 ou par FR-A-2 030 034.

Il existe aussi des dispositifs tels que celui décrit par US 3 605 411 qui permettent d'avoir une saillie de becquet vers l'amont lorsque les portes sont déployées tout en permettant une continuité de la paroi externe du conduit lorsque les portes ne sont pas déployées. On connait également par FR-A-2 618 853 un dispositif où le becquet est escamoté en jet direct de façon à optimiser les performances du moteur.

Dans certaines applications, comme représenté sur la figure 1, les becquets 13 font saillie par rapport à la face interne 11 des portes 7, même en jet direct sans pour autant faire saillie dans le conduit qui est dans cet exemple muni de cavités 16 légèrement préjudiciables aux performances du moteur alors que le dispositif d'inversion devient extrêmement simple.

La combinaison des becquets et des bords de déviation permettent également d'optimiser la direction d'éjection du flux comme indiqué par FR-A-2 680 547.

Enfin la commande des portes d'une position à une autre par vérin est connue en soi, nous noterons cependant la solution très simple où il y a un vérin par porte fixé dans sa partie amont à la structure fixe amont du capotage extérieur, et dans sa partie aval à la porte en un point situé dans la partie amont comme décrit par exemple par FR 1 482 538.

Le type d'inverseur de poussée décrit ci-dessus a l'inconvénient majeur que, pour des raisons imposées par des contraintes de dimensionnement aérodynamique du passage du flux dans les passages dégagés par la partie amont de ces portes, la pression du conduit exerce sur ces portes une action qui tend à les ouvrir, en effet, la section totale de ces passages doit être supérieure à la section du conduit dans un plan situé en amont des portes, ceci à cause des pertes en charge engendrées par la déviation du flux, ceci dans le cas où la section de fuite (partie aval du conduit non obstruée par la partie aval des portes), est minimisée de façon à obtenir une contre poussée convenable.

L'inconvénient majeur décrit ci-dessus se traduit suivant les deux aspects suivants :
- le fait que les portes tendent à s'ouvrir est un inconvénient du point de vue de la sécurité. Des portes sur lesquelles l'action de la pression tendrait à les maintenir fermées (non déployées), rendrait le dispositif plus sûr, de même que des portes sur lesquelles l'action de la pression tendrait à les refermer lorsque celles-ci sont dans une position telle que la poussée n'est pas encore inversée, même si elle est partiellement détruite (nous reviendrons sur ce dernier point)
- l'action de la pression sur les portes est dans certains exemples connus telle que dans certains cas à prendre en compte dans le dimensionnement de l'inverseur, des efforts très importants transitent dans les vérins entre leurs points d'attache sur la partie amont de la structure fixe et sur les portes. Il en résulte une masse importante de la structure, du système de commande des portes et de verrouillage de celles-ci, et des portes elles-mêmes.

L'objet de l'invention est de proposer un moyen qui permet d'accroître la sécurité et/ou de réduire la masse de ce type d'inverseur ou en améliorer les performances en jet inversé.

EP-A-0 413 635 décrit un inverseur à portes associées à un panneau amont, entraîné par la porte au moyen d'un organe de liaison ou bielle dans le même sens de rotation que lesdites portes. Cette disposition a l'inconvénient majeur de faire "bouclier" au flux en mode jet inversé et de ne pas permettre un guidage optimal du flux.

Les buts sont atteints conformément à l'invention, par un inverseur de poussée à portes pivotantes du type précité caractérisé en ce que le panneau amont non relié à la porte est susceptible lors du fonctionnement en inversion de poussée de pivoter dans un sens inversé à celui de la porte de manière à présenter un bord amont plus proche radialement de l'axe géométrique de symétrie du conduit que le bord aval, formant une écope qui prélève une partie externe de la veine pour assurer un pilotage des nappes du flux inversé et l'efficacité de l'inversion.

D'autres caractéristiques et avantages de l'invention seront mieux compris à la lecture de la description qui va suivre d'un mode de réalisation de l'invention en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermée, d'un type connu et qui a fait précédemment l'objet d'une description ;
- la figure 2 représente une vue schématique en perspective d'un inverseur de poussée du type précité montré en position monté et avec les portes fermées ;
- la figure 3 représente, dans une vue analogue à celle de la figure 1 un inverseur de poussée à portes pivotantes, en position jet direct, selon un mode de réalisation de l'invention ;
- la figure 4 représente le principe défini sur la figure 3 en position jet inversé ;
- les figures 5, 7 et 9 représentent, dans une vue analogue à celle de la figure 1 d'autres types de cinématique d'entraînement du panneau ;
- les figures 6, 8 et 10 représentent les mêmes principes définis sur les figures 5, 7 et 9 en position jet inversé ;
- la figure 11 représente l'entraînement du panneau indépendamment de la porte en position jet direct ;
- la figure 12 représente le principe défini sur la figure 11 en position jet inversé ;
- les figures 13 à 16 représentent des exemples de détourage du panneau ;
- les figures 17 à 22 représentent des exemples de formes et d'aménagements des panneaux, la figure 20 représentant une vue en coupe suivant la ligne XX-XX du panneau de la figure 19 et la figure 22 représentant une coupe suivant la ligne XXII-XII du panneau de la figure 21 ;
- les figures 23 et 24 représentent un exemple de verrouillage de la porte par ledit panneau.

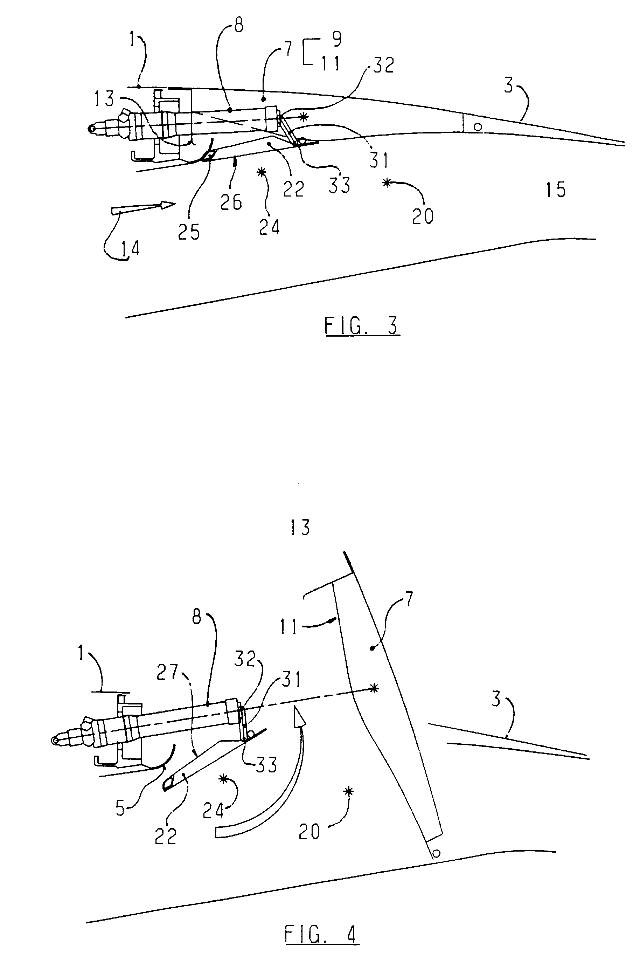

Selon un mode de réalisation de l'invention représenté sur les figures 3 et 4, un inverseur de poussée susceptible d'effectuer dans les phases de vol pertinentes d'un avion une inversion de flux du turboréacteur associé comporte les parties principales connues et précédemment décrites dans un exemple connu de réalisation, en référence aux figures 1 et 2. On retrouve notamment la structure fixe amont 1, les portes 7 comportant la partie extérieure 9, la partie intérieure 11, un becquet 13 et associées à un vérin de commande 8, et la partie aval 3.

Comme précédemment décrit selon EP-A-0 413 635, le lissage de veine en jet direct est obtenu au moyen d'un panneau amont 22 dont la paroi interne 26 forme une partie de la veine externe du canal annulaire 15.

L'étanchéité est assurée par un joint 25 placé entre le panneau amont 22, une partie de la structure fixe 1 et une partie de la porte 7. Les exemples montrés représentent ce joint installé sur le panneau amont 22 mais il faut noter qu'un montage inversé peut être aussi utilisé, c'est à dire que la partie de la structure fixe 1 et la partie de la porte 7 peuvent recevoir et contenir, dans une position permettant la continuité des lignes, le ou les joints.

Le point pivot 24 du panneau 22 est placé sur la structure fixe 1 généralement au niveau des poutres 18 de l'inverseur et se situe dans une zone comprise entre l'amont et l'aval du panneau 22, ceci en fonction du but recherché et de la cinématique retenue. Dans notre cas recherchant un maintien ou une aide en position jet direct de l'équilibrage, ce point est placé de telle sorte que l'action du flux symbolisé par la flèche 14 qui exerce une pression sur ledit panneau 22 tend à faire pivoter la porte 7 dans le sens inverse de son ouverture. L'axe transversal dudit pivot 24 peut être prévu non parallèle avec l'axe transversal 20 de la porte 7.

Selon la figure 4, le panneau amont 22 est entraîné directement par le vérin 8 relié par un moyen d'entraînement assuré comme dans l'exemple par au moins une bielle 31, cette bielle est montée sur le corps du vérin 8 en un point 32 et reliée sur le panneau en un point pivot 33.

Il est à préciser que l'angle de manoeuvre dudit panneau 22 est selon l'effet recherché fonction de la position du point pivot 24 et de la position des points pivot 32, 33 du moyen d'entraînement 31.

L'effet remarquable dans cette position en mode jet inversé est qu'une partie du flux dans la zone de la veine externe est "écopée" par la paroi externe 27 du panneau 22 et dirigée vers l'amont du panneau interne 11 de la porte 7 obligeant l'autre partie du flux de rencontrer avec une meilleure efficacité la zone du becquet 13 de porte 7 renforçant ainsi l'effet du becquet sur le flux en phase de jet inversé et fournissant les caractéristiques de contre-poussée désirée.

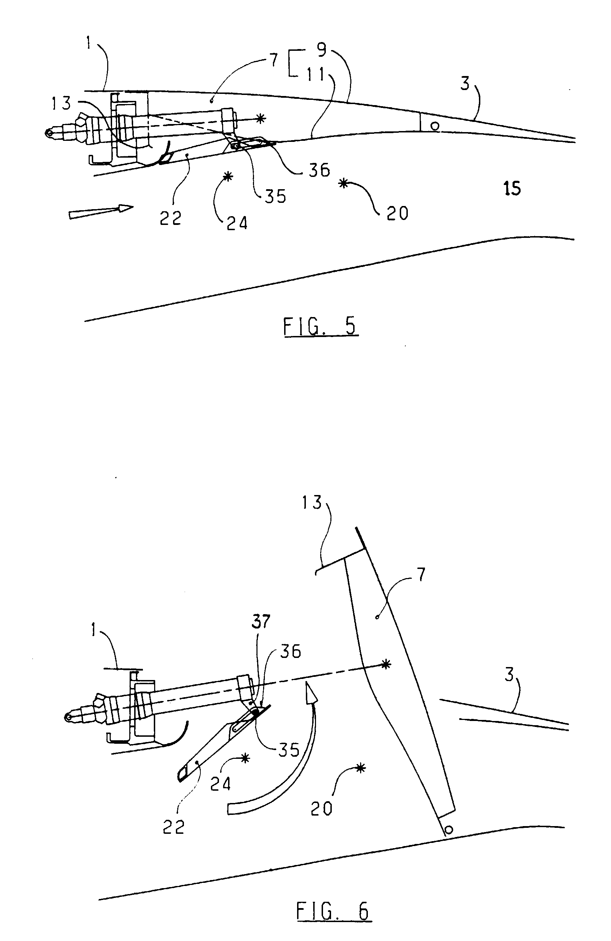

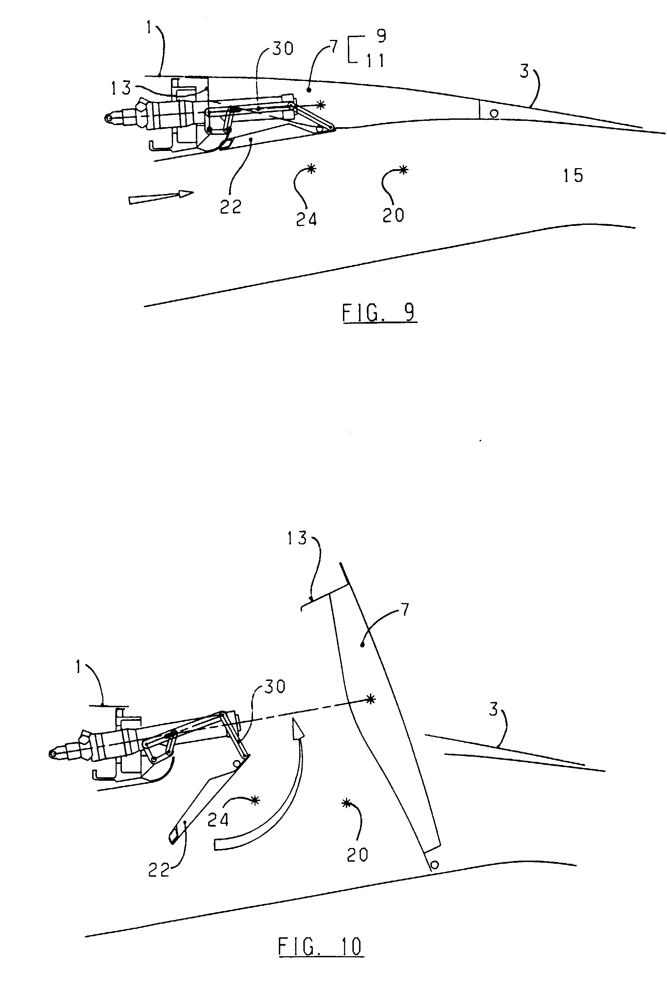

Les figures 5 à 10 montre d'autres réalisations possibles mais non-exhaustives de cinématique d'entraînement reliées au vérin 8 de la porte 7 :
- les figures 5 et 6 représentent un entraînement par un ou plusieurs galets 35 portés par un support 37 solidaire du vérin 8 et se déplaçant dans un guide 36 associé au panneau 22 ;

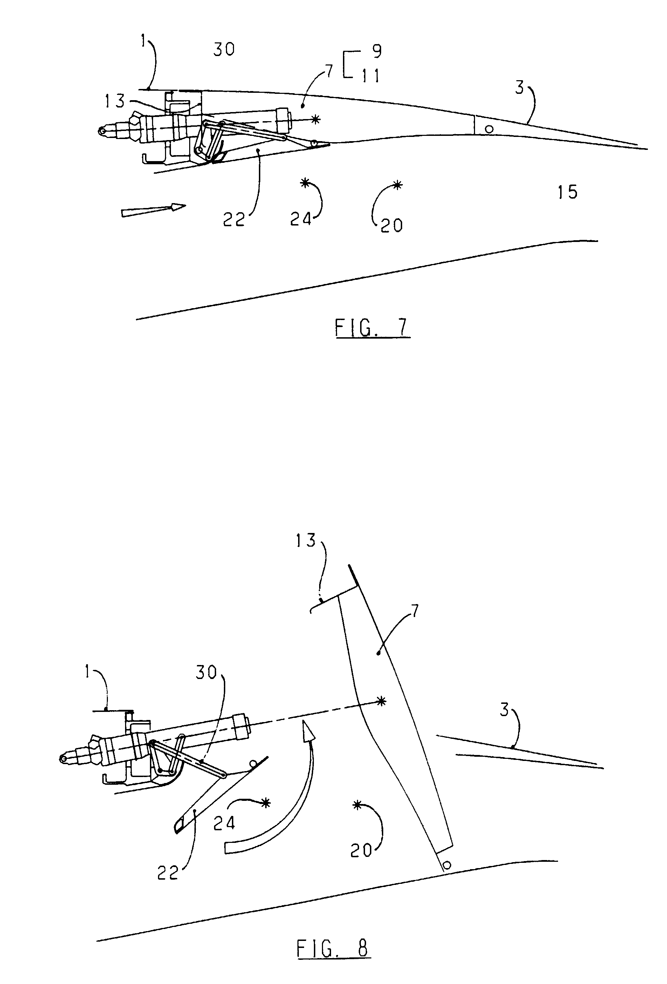

- les figures 7 à 10 représentent d'autres moyens d'entraînement permettant de décupler la cinématique d'entraînement du panneau 22 grâce à un système de biellettes associées 30.

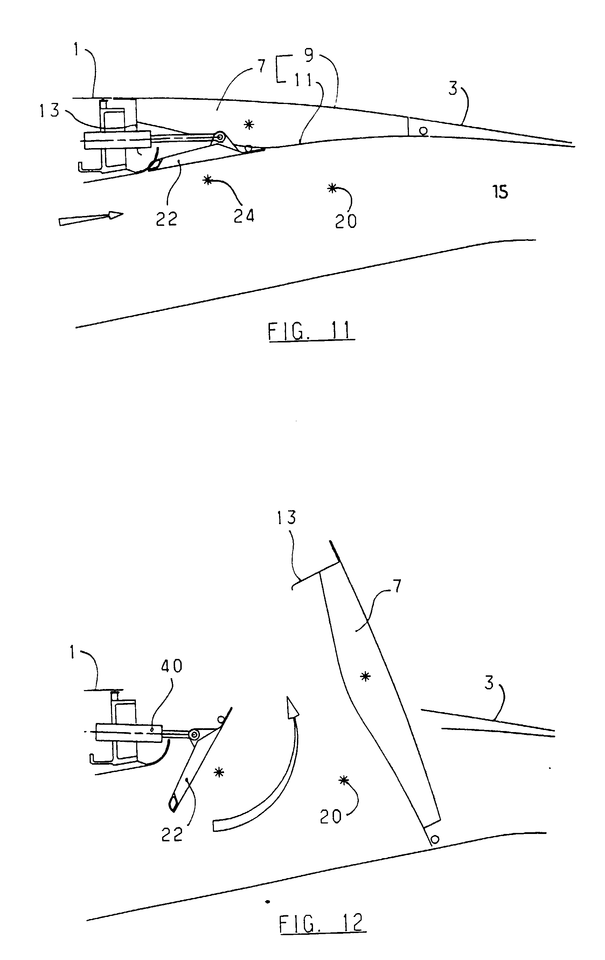

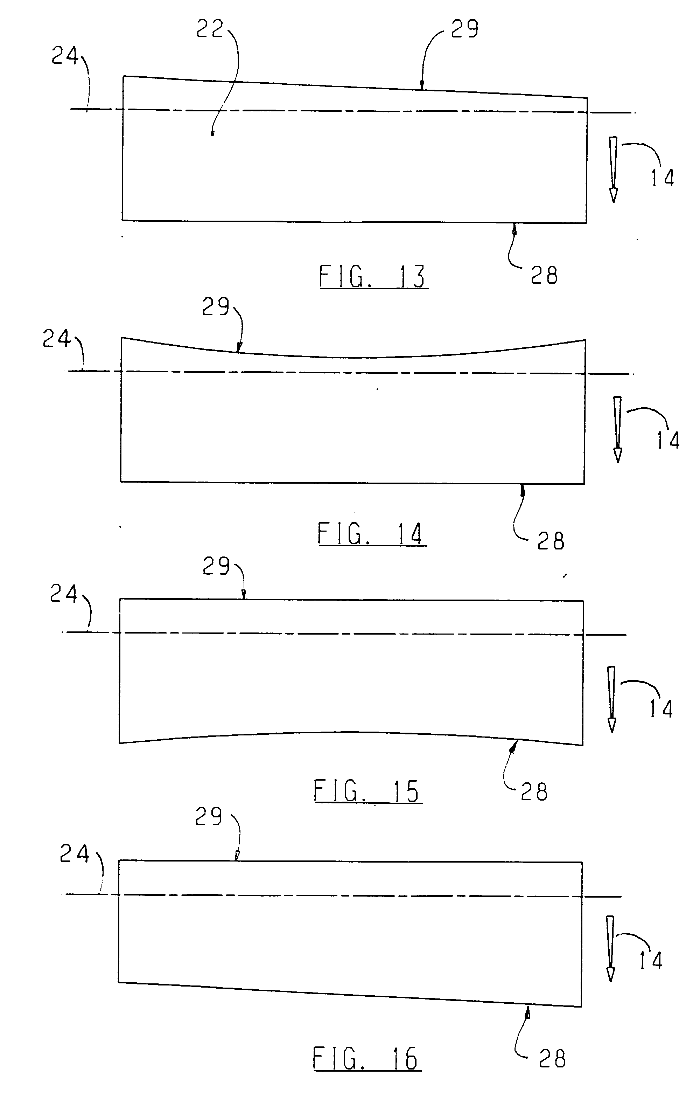

Selon les figures 11 et 12 on peut dissocier la manoeuvre du panneau 22 du vérin 8 de commande de porte. En effet, l'entraînement dudit panneau 22 par un vérin indépendant 40 ou bien par un autre système indépendant connu de l'homme du métier tel que l'entraînement par un axe du panneau peut être envisagé.Il est donc dans ce cas intégré sur la structure fixe 1 soit dans l'axe longitudinal du panneau 22 soit décalé de cet axe.

Le vérin 40 peut être du type électrique, hydraulique, synchronisé avec le système de l'inverseur ou bien totalement indépendant.

Le panneau 22 ainsi rendu libre par rapport à la porte 7 peut être manoeuvré à n'importe quel stade de la phase de jet inversé et ainsi remplir les conditions optimales en performance. L'angle d'ouverture du panneau 22 peut facilement être ajustable car il n'y a pas l'impératif de cinématique comme rencontré dans les autres systèmes. La manoeuvre du panneau 22 peut même ne pas être actionnée selon l'effet de jet inversé désiré. Il est à préciser que le panneau 22 peut être aussi dans ce cas autofermant ou non selon la position du pivot 20 définie.

L'effet de ce principe par rapport à la porte 7 est qu'il n'y a plus qu'une prise en compte de la surface interne 11 de porte en contact avec le flux entre le pivot de porte 20 et l'aval du panneau 22 et entre le pivot de porte 20 et l'aval de la porte 7.

Selon les exemples non limitatifs des figures 13 à 16 la découpe en amont 28 et en aval 29 du panneau 22 peut être de différentes formes : droite, évolutive, concave, convexe ou dissymétrique suivant la définition du bord de déviation 5 et du panneau interne 11 de porte 7 comme par exemple défini par FR-A-2 559 838, toujours dans un souci de lissage de veine.

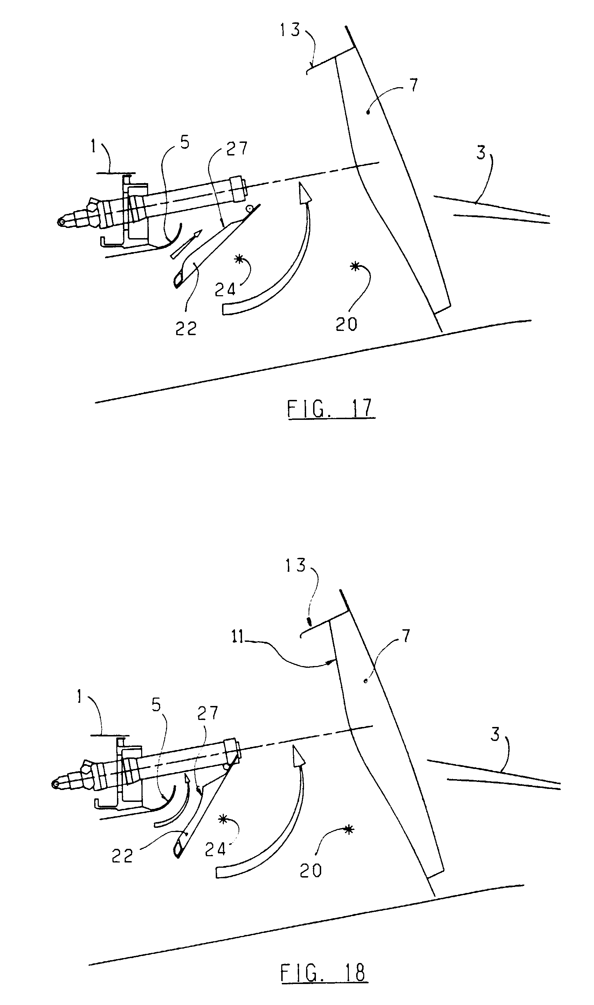

Selon les figures 17 et 18, la forme de la paroi interne 27 du panneau 22 peut être de différentes configurations. Ces profils sont de formes aérodynamiques et en conjugaison avec le bord de déviation 5 retenu, plat ou rond, permet un rendement optimal du flux de déviation.

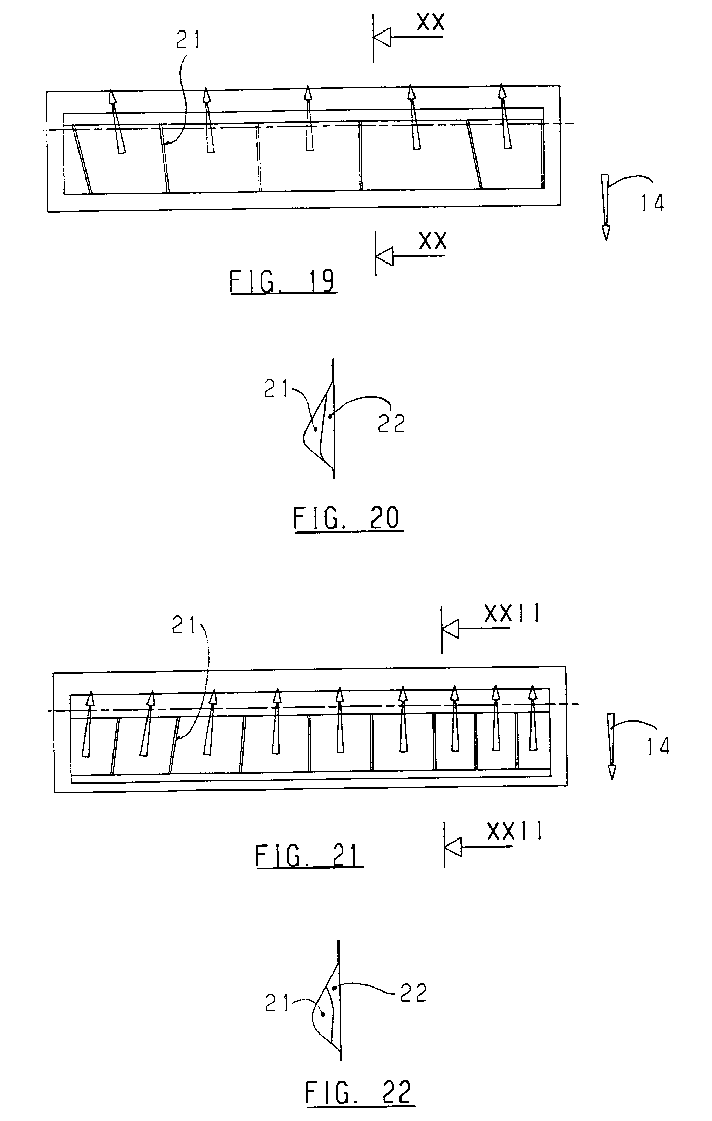

A ces profils, suivant les figures 19 à 22, une ou plusieurs parois 21 peuvent être associées d'une part pour renforcer la tenue structurale du profil par lui-même, d'autre part pour orienter suivant la direction souhaitée le flux de jet inversé compris entre le bord de déviation et la face externe 27 de ce profil.

Ces parois 21 sont disposées dans le sens longitudinal de l'axe moteur, elles peuvent être inclinées ou normales par rapport à la surface du panneau, parallèles ou non par rapport à l'axe longitudinal du moteur et entre elles, de nombre, de forme, de hauteur et/ou de largeur, différents d'un panneau 22 à l'autre et entre deux parois 21.

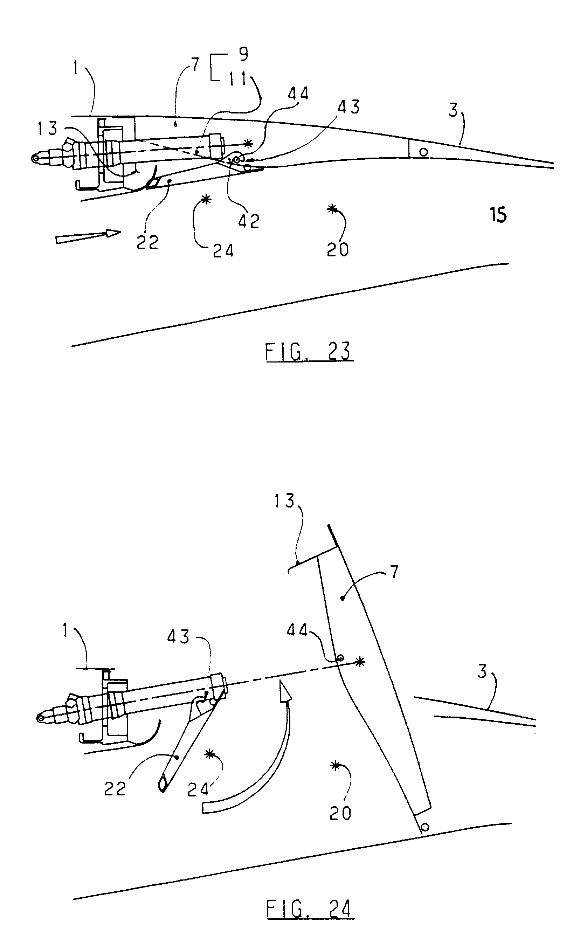

Selon les figures 23 et 24, un ou plusieurs systèmes de verrouillage de la porte 7 peuvent être intégrés au panneau 22, ce qui au niveau de la sécurité contre le déploiement intempestif d'une porte en phase de vol normal est très intéressant. Chaque système comme montré à titre d'exemple est constitué d'un ou plusieurs crochets 42 fixé sur le panneau 22 et d'un ou plusieurs axes 44 fixé sur la porte 7. Le crochet peut avoir un bec 43 en retour interdisant la manoeuvre d'un élément, le panneau 22 ou de l'autre la porte 7, tant que la manoeuvre de l'ensemble n'est pas commandée spécifiquement, en effet on peut envisager la fin du pivotement du panneau 22 au moment du sur-escamotage de la porte 7 ce qui, en tenant compte des rotations opposées desdits éléments, contrarie complètement la manoeuvre non désirée de l'un et de l'autre élément.

Bien sur, certains systèmes et/ou certaines configurations peuvent être utilisés seul ou en association entre-eux. Ceci est très remarquable dans le cas de pilotage de nappes par exemple car certaines associations peuvent permettre d'avoir un inverseur à portes associées à des panneaux 22 ayant des angles d'ouverture différents entre-eux, des détourages 28, 29 particuliers pour chaque panneau, des parois 21 de configurations spécifiques pour chaque élément, des axes pivot 24 non parallèles entre-eux et/ou tout autre paramètre précédemment défini permettant la meilleure gestion de la direction des nappes en jet inversé.

## Revendications

1. Inverseur de poussée de turboréacteur à double flux comportant des portes pivotantes (7), susceptibles, en position fermée, lors d'un fonctionnement en jet direct, de s'intégrer dans la paroi extérieure du conduit de flux en arrière de la soufflante de turboréacteur, et susceptibles en outre chacune de pivoter sous l'action d'un moyen de commande (8) des déplacements de manière à constituer des obstacles de déviation de flux lors d'un fonctionnement en inversion de poussée, la partie amont de chaque porte (7) étant doublée sur sa face interne, en position fermée, par un panneau amont (22) assurant un lissage de la veine fluide en jet direct caractérisé en ce que ledit panneau amont (22) non relié à la porte (7) est susceptible lors du fonctionnement en inversion de poussée de pivoter dans un sens inverse à celui de la porte (7) de manière à présenter un bord amont plus proche radialement de l'axe géométrique de symétrie du conduit que le bord aval, formant une écope qui prélève une partie externe de la veine pour assurer un pilotage des nappes du flux inversé et l'efficacité de l'inversion.

2. Inverseur de poussée de turboréacteur à double flux selon la revendication 1 dans lequel ledit panneau amont (22) pivote autour de pivots (24) de support solidaires des poutres longitudinales fixes (18) de l'inverseur et des joints d'étanchéité (25) sont respectivement disposés à la jonction en jet direct entre les bords amont et aval du panneau amont (22) et les parties coopérantes de structure fixe amont (1) et de porte (7).

3. Inverseur de poussée de turboréacteur à double flux selon la revendication 2 dans lequel ledit panneau amont (22) est relié et entraîné par au moins une bielle (31) montée entre un pivot (32) solidaire du corps du vérin (8) de commande des déplacements de la porte (7) et un pivot (33) solidaire dudit panneau amont (22).

4. Inverseur de poussée de turboréacteur à double flux selon la revendication 2 dans lequel un support (37) solidaire du vérin (8) porte au moins un galet (35) susceptible de se déplacer dans un guide (36) solidaire du panneau amont (22).

5. Inverseur de poussée de turboréacteur à double flux selon la revendication 2 dans lequel le déplacement du panneau amont (22) est assuré par un système de biellette (30) relié au vérin (8) et permettant de décupler la cinématique.

6. Inverseur de poussée de turboréacteur à double flux selon la revendication 2 dans lequel ledit panneau amont (22) est associé à un moyen de commande des déplacements tel qu'un vérin (40) porté par la structure fixe de l'inverseur et indépendant du moyen de commande des déplacements de la porte (7).

7. Inverseur de poussée de turboréacteur à double flux selon l'une quelconque des revendications 1 à 6 dans lequel une découpe particulière du bord amont (28) et du bord aval (23) du panneau amont (22) est adaptée à l'effet de lissage de veine, en jet direct, dans le raccordement aux éléments d'inverseur coopérants, bord de déviation (5) et panneau interne (11) de la porte (7).

8. Inverseur de poussée de turboréacteur à double flux selon l'une quelconque des revendications 1 à 7 dans lequel la paroi (27) du panneau amont (22) en contact avec la partie de flux prélevée lors du fonctionnement en inversion de poussée est aérodynamiquement profilée de manière à assurer les écoulements optimaux.

9. Inverseur de poussée de turboréacteur à double flux selon la revendication 8 dans lequel un ou plusieurs éléments en relief formant parois (21) sont disposés dans le sens longitudinal de l'axe du turboréacteur sur ladite paroi (27) du panneau amont (22) et répartis d'un bord latéral à l'autre du panneau.

10. Inverseur de poussée de turboréacteur à double flux selon la revendication 9 caractérisé en ce que lesdits éléments en relief formant parois (21) sont de forme, d'orientation et de disposition différents entre eux.

11. Inverseur de poussée de turboréacteur à double flux selon l'une quelconque des revendications 1 à 10 dans lequel ledit panneau amont (22) porte un ou plusieurs crochets (42) susceptible dans la configuration de jet direct de verrouiller l'ensemble porte et panneau par accrochage sur un axe (44) porté par la porte (7).

12. Inverseur de poussée de turboréacteur à double flux selon l'une quelconque des revendications 1 à 11 dans lequel toutes les portes comportent la même configuration de panneau et d'entraînement.

13. Inverseur de poussée de turboréacteur à double flux selon l'une quelconque des revendications 1 à 11 dans lequel une ou plusieurs portes comportent une configuration spécifique de panneau et d'entraînement.

14. Inverseur de poussée de turboréacteur à double flux selon l'une quelconque des revendications 1 à 11 dans lequel l'axe transversal du pivot de panneau (24) est non parallèle avec l'axe transversal (20) de la porte (7).
